# EUROPÄISCHE PATENTSCHRIFT

(11) **EP 3 030 951 B1**
(45) Veröffentlichungstag und Bekanntmachung des Hinweises auf die Patenterteilung: **22.03.2017**
(21) Anmeldenummer: 14735848.5
(22) Anmeldetag: 20.06.2014
(51) Int. Cl.: G06F 3/01

(54) **VERFAHREN ZUM BESTIMMEN EINES GESCHWINDIGKEITSVEKTORS FÜR EIN GESTENERKENNUNGSSYSTEM IN EINEM KRAFTWAGEN UND VORRICHTUNG ZUM DURCHFÜHREN DES VERFAHRENS**
METHOD FOR DETERMINING A VELOCITY VECTOR FOR A GESTURE RECOGNITION SYSTEM IN A MOTOR VEHICLE AND DEVICE FOR CARRYING OUT SAID METHOD
PROCÉDÉ DE DÉTERMINATION D'UN VECTEUR DE VITESSE POUR UN SYSTÈME DE RECONNAISSANCE DE GESTES INSTALLÉ DANS UNE AUTOMOBILE ET DISPOSITIF DE MISE EN OEUVRE DE CE PROCÉDÉ

(30) Priorität: 06.08.2013 DE 102013013065
(43) Veröffentlichungstag der Anmeldung: 15.06.2016
(73) Patentinhaber: Daimler AG, 70327 Stuttgart (DE)
(72) Erfinder: ENTENMANN, Volker, 71563 Affalterbach (DE)
(74) Vertreter: JENSEN & SON
(86) Internationale Anmeldenummer: PCT/EP2014/001678
(87) Internationale Veröffentlichungsnummer: WO 2015/018469

(56) Entgegenhaltungen:
- EP-A1- 1 947 549
- DE-A1-102009 030 592
- US-A1- 2013 027 300

## Beschreibung

Die Erfindung betrifft ein Verfahren gemäß dem Oberbegriff von Anspruch 1, sowie eine Vorrichtung zum Durchführen des Verfahrens.

In modernen Kraftwagen setzen sich zum Steuern von Zusatzfunktionen der Kraftwagen zunehmend Systeme durch, welche mit Gesten gesteuert werden. Entsprechend kommt in modernen Kraftwagen eine Vielzahl von unterschiedlichen Gestenerkennungssystemen zur Anwendung. Es handelt sich sowohl um berührungslose Systeme, welche eine Geste beispielsweise über eine Kamera erkennen, als auch um Systeme, die durch einen Nutzer berührt werden müssen, um eine Geste erkennen zu können, wie beispielsweise berührungsempfindliche Bildschirme oder optische Fingernavigationsmodule (auch "Optical Finger Navigation" oder "OFN" genannt). Für sämtliche Gestenerkennungssysteme in einem Kraftwagen gilt, dass eine Geschwindigkeit, vor allem jedoch eine Richtung einer Geste möglichst präzise bestimmt werden soll. Die augenblickliche Geschwindigkeit und Richtung einer Geste können durch einen Geschwindigkeitsvektor dargestellt werden. Dessen Richtung repräsentiert dann die Richtung der erfassten Geste und seine Länge die Geschwindigkeit der Geste.

Die vorliegende Erfindung weist die Aufgabe auf, ein Verfahren und eine Vorrichtung zum Bestimmen eines Geschwindigkeitsvektors für ein Gestenerkennungssystem in einem Kraftwagen zu schaffen, mittels welchen der Geschwindigkeitsvektor mit einer hohen Genauigkeit und gleichzeitig mit einer hohen Dynamik bestimmbar ist.

Diese Aufgabe wird erfindungsgemäß durch ein Verfahren bzw. eine Vorrichtung gemäß den unabhängigen Ansprüchen gelöst.

Vorteilhafte Ausgestaltungen der Erfindung sind Gegenstand der abhängigen Ansprüche.

Um ein besonders genaues und gleichzeitig dynamisches Bestimmen eines Geschwindigkeitsvektors zu erzielen, sind zum Bestimmen eines Geschwindigkeitsvektors für ein sensorisches Erkennungssystem bzw. Gestenerkennungssystem in einem Kraftwagen zunächst zwei Schritte vorgesehen: ein Erfassen von Bewegungsdaten durch eine Erfassungseinheit und ein Übermitteln der Bewegungsdaten in Form von Vektoren an eine Verarbeitungseinheit. Hierauf erfolgt ein Summieren der Vektoren zu einem Summenvektor durch die Verarbeitungseinheit. Dies geschieht so lange, bis entweder der Summenvektor eine vorbestimmte Mindestlänge erreicht oder eine vorbestimmte Anzahl an Vektoren aufsummiert ist. Falls die vorbestimmte Anzahl der Vektoren aufsummiert ist, und die vorbestimmte Länge des Summenvektors nicht erreicht ist, wird der Geschwindigkeitsvektor als Nullvektor bestimmt. Falls die vorbestimmte Länge des Summenvektors erreicht ist, wird unabhängig von der Anzahl der aufsummierten Vektoren der Geschwindigkeitsvektor durch eine Mittelung der in dem Summenvektor beinhalteten Informationen bestimmt. Hier erfolgt die Mittelung über die Anzahl der in dem Summenvektor summierten Vektoren. Es handelt sich also quasi um eine Art einer Normierung.

Mit anderen Worten wird also in dem Summenvektor Information über die erfassten Bewegungsdaten angesammelt und wird diese angesammelte Information ausgewertet, sobald sie eine bestimmte Menge überschreitet. Ist zu diesem Zeitpunkt der Gehalt der gesammelten Information nicht ausreichend für ein zuverlässiges Bestimmen des Geschwindigkeitsvektors, wird dieser als null bestimmt. Ist der Gehalt der Information jedoch ausreichend für ein zuverlässiges Bestimmen des Geschwindigkeitsvektors, wird dieses Bestimmen durch eine Mittelung durchgeführt. Dies hat den Vorteil, dass bei einer langsamen Geschwindigkeit der von den Bewegungsdaten repräsentierten Geste durch eine träge Mittelwertbildung ein genaues Bestimmen des Geschwindigkeitsvektors erfolgen kann. Gleichzeitig wird bei einer schnellen Geschwindigkeit der von den Bewegungsdaten repräsentierten Geste faktisch eine Einzelwertbetrachtung durchgeführt und damit eine hohe Dynamik erzielt. Es können somit sowohl langsame als auch hohe Geschwindigkeiten jeweils mit optimaler Genauigkeit und Dynamik bestimmt werden.

Vorteilhaft erfolgt das Summieren der Vektoren zu einem Summenvektor durch die Verarbeitungseinheit, bis entweder der Summenvektor eine vorbestimmte Mindestlänge erreicht oder eine vorbestimmte Anzahl an Vektoren summiert ist, oder das Summieren eine vorgegebene Zeit erfolgt ist. Das heißt, das Summieren wird beendet und der Geschwindigkeitsvektor bestimmt, sobald eine vorgegebene Zeit seit dem Bestimmen des letzten Geschwindigkeitsvektors verstrichen ist. Dies hat den Vorteil, dass das Verfahren auch zuverlässig mit Erfassungseinheiten funktioniert, die unter gewissen Umständen keine Bewegungsdaten an die Verarbeitungseinheit übermitteln. So wird beispielsweise ein unendlich langes Warten verhindert, wenn die Erfassungseinheit ausfallen oder schlicht keine Bewegungsdaten erfassen sollte.

Weiterhin vorteilhaft wird der Geschwindigkeitsvektor aus dem Summenvektor bestimmt, sobald zwei aufeinander folgende, zu summierende Vektoren die Länge null haben. Dies hat den Vorteil, dass ein Nachlaufen des Summenvektors bei einem plötzlichen Stoppen der von den Bewegungsdaten repräsentierten Geste, oder, im Falle einer berührungsempfindlichen Erfassungseinheit, auch bei einem Unterbrechen der Berührung, vermieden wird. Es wird also, sobald die Geschwindigkeit der von den Bewegungsdaten repräsentierten Geste auf null sinkt, auch der Geschwindigkeitsvektor zu null gesetzt.

Insbesondere ist hier vorgesehen, dass der Geschwindigkeitsvektor aus dem Summenvektor bestimmt wird, sobald für eine vorgegebene Zeit kein Vektor an die Verarbeitungseinheit übermittelt wird. Dieses hat den zuvor erwähnten Vorteil insbesondere in dem Fall, in dem die Erfassungseinheit keine Bewegungsdaten übermittelt, solange sie keine erfasst.

Vorteilhaft wird der Geschwindigkeitsvektor aus dem Summenvektor bestimmt, sobald sich die Länge zweier aufeinander folgender, zu summierender Vektoren um mehr als die Mindestlänge unterscheidet. Dies hat den Vorteil, dass große Veränderungen der Geschwindigkeit schnell erkannt werden und ggf. ein Überprüfen der Länge des Summenvektors entfallen kann, was zu einer schnelleren Verarbeitung führt. Insbesondere können so abrupte Richtungsänderungen schnell und präzise erkannt werden.

Es kann ferner vorgesehen sein, dass die Bewegungsdaten durch eine berührungsempfindliche Erfassungseinheit erfasst werden. Dies hat den Vorteil, dass ein effizientes Bestimmen des Geschwindigkeitsvektors möglich ist, da in einem Kraftwagen mit mehreren Insassen grundsätzlich Bewegungsdaten nur erfasst werden, wenn auch tatsächlich eine Berührung vorliegt, also eine Geste gewollt und damit eine Gestenerkennung erwünscht ist.

Besonders vorteilhaft ist, dass die Bewegungsdaten durch ein optisches Fingernavigationsmodul erfasst werden. Derartige Module, auch "Optical Finger Navigation module" genannt, eignen sich in ganz besonderer Weise für eine Anwendung des Verfahrens, da hier nur Bewegungsinkremente erfasst werden, so dass eine hohe Genauigkeit in Kombination mit einer hohen Dynamik in diesem Fall besonders wünschenswert ist. Insbesondere sind solche Module besonders klein, vielseitig verwendbar, und stromsparend, so dass sie sich für eine Verwendung in einem Kraftwagen anbieten.

Bevorzugt ist vorgesehen, dass die Bewegungsdaten in diskreten, vorbestimmten Zeitintervallen übermittelt werden. Dies hat den Vorteil, dass das eine weitere Verarbeitung sehr einfach ist und das Verfahren so besonders kostengünstig technisch realisiert werden kann.

Vorteilhaft ist weiter vorgesehen, dass die Bewegungsdaten in veränderlichen Zeitintervallen übermittelt werden. Das hat den Vorteil, dass Kommunikationsbandbreite eingespart werden kann, da keine Nullinformationen übermittelt werden und ferner mit Erfassungseinheiten gearbeitet werden kann, welche nur Bewegungsdaten übersenden, wenn sie auch Bewegungsdaten erfassen.

Die Erfindung betrifft auch eine Vorrichtung zum Bestimmen eines Geschwindigkeitsvektors für ein Gestenerkennungssystem in einem Kraftwagen, wobei die Vorrichtung Einrichtungen aufweist, die zum Durchführen des vorhergehenden Verfahrens oder seiner vorteilhaften Ausgestaltungen geeignet sind.

Die mit Bezug auf das erfindungsgemäße Verfahren vorgestellten bevorzugten Ausführungsformen und deren Vorteile gelten entsprechend für die erfindungsgemäße Vorrichtung.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die vorliegende Erfindung wird nachstehend anhand von Ausführungsformen unter Bezugnahme auf die beiliegende Zeichnung näher erläutert.

Es zeigt:
Fig. 1 ein Flussdiagramm des erfindungsgemäßen Verfahrens;
Fig. 2 eine beispielhafte Darstellung von Längen von Vektoren, welche von einer Erfassungseinheit an eine Verarbeitungseinheit übermittelt werden, über der Zeit;
Fig. 3 eine beispielhafte Darstellung einer Länge eines Summenvektors über der Zeit gemäß einer Ausführungsform entsprechend den in Fig. 2 dargestellten Längen von Vektoren;
Fig. 4 eine beispielhafte Darstellung einer Länge eines Summenvektors über der Zeit gemäß einer weiteren Ausführungsform entsprechend den in Fig. 2 dargestellten Längen von Vektoren; und
Fig. 5 eine Darstellung von für das Verfahren relevanten Größen über der Zeit für eine langsame Wischbewegung.

In den Figuren werden gleiche oder funktionsgleiche Elemente mit den gleichen Bezugszeichen versehen.

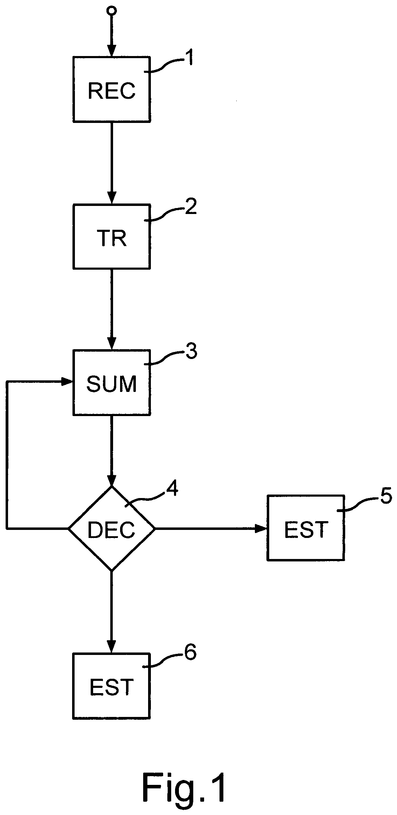

In Fig. 1 ist ein Flussdiagramm des erfindungsgemäßen Verfahrens gezeigt. In einem ersten Schritt findet hier ein Erfassen 1 von Bewegungsdaten statt, welche eine Geste eines Nutzers repräsentieren. Dieses Erfassen 1 kann beispielsweise durch eine Kamera, jedoch auch durch ein berührungsempfindliches Anzeigeelement oder, besonders vorteilhaft, durch ein optisches Fingernavigationsmodul, ein sogenanntes "Optical Finger Navigation"-Modul, erfolgen.

Die erfassten Daten werden dann in einem zweiten Schritt durch ein Übermitteln 2 in Form von Vektoren an eine Verarbeitungseinheit dieser zur Verfügung gestellt. Dieses Übermitteln 2 kann z.B. in regelmäßigen, festgelegten Zeitintervallen, z.B. alle 40 ms, erfolgen, wobei dann, sollten in einem solchen Zeitintervall keine Bewegungsdaten erfasst werden, dennoch ein Übermitteln 2 erfolgt und beispielsweise ein Nullvektor übermittelt wird. Alternativ kann das Übermitteln 2 auch nur dann erfolgen, wenn tatsächlich Bewegungsdaten erfasst werden.

In einem dritten Schritt findet dann ein Summieren 3 statt, wo die übermittelten Vektoren zu einem Summenvektor aufaddiert werden.

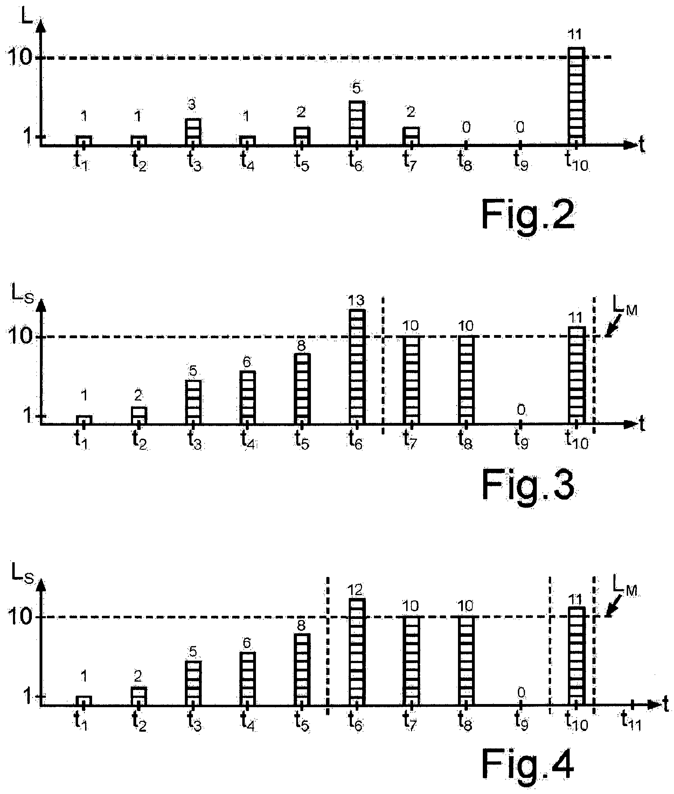

Nun kann beispielsweise in einem weiteren Schritt ein Überprüfen 4 erfolgen, wobei festgestellt wird, ob die Länge des Summenvektors einen vorgegebenen Wert einer vorbestimmten Mindestlänge L_{M} (Fig. 3, 4), z.B. entsprechend einer Bewegung von 0,75mm, überschreitet oder ob eine gewisse Maximalanzahl N_{M} (Fig. 4) von Vektoren, z.B. 20, zu dem Summenvektor aufsummiert wurde und beispielsweise auch ob das Summieren 3 bereits eine bestimmte, vorgegebene Zeit andauert. Sollte keine der zwei bzw. drei Bedingungen zutreffen, so wird mit dem Summieren 3 fortgefahren. Andernfalls wird das Summieren 3 beendet und der aktuelle Geschwindigkeitsvektor bestimmt.

Sollte der Summenvektor noch kürzer sein als die vorbestimmte Mindestlänge L_{M} (Fig. 3, 4), so liegen für ein zuverlässiges Bestimmen des Geschwindigkeitsvektors keine ausreichenden Bewegungsdaten vor, und es folgt ein Bestimmen 5 des aktuellen Bewegungsvektors als Nullvektor. Es wird also davon ausgegangen, dass keine Bewegung erfolgt ist.

Sollte der Summenvektor zumindest die vorgegebene Mindestlänge L_{M} (Fig. 3, 4) erreichen, so folgt ein Bestimmen 6 des aktuellen Bewegungsvektors aus den im Summenvektor enthaltenen Informationen. Dies erfolgt über eine Form der Mittelung, d.h. beispielsweise wird der Summenvektor in seiner Länge L_{S} (Fig. 2) durch die Anzahl der zu ihm beitragenden Vektoren, welche aufsummiert wurden, geteilt. Durch diese Kombination unterschiedlicher Abbruchbedingungen für das Summieren 3, wird automatisch im Falle einer langsamen Bewegung eine träge Mittelung durchgeführt, und im Falle einer schnellen Bewegung eine Geschwindigkeitsvektorbestimmung durch ein Ermitteln von Einzelwerten. Es ist somit in beiden Fällen eine bestmögliche Genauigkeit und Dynamik für das Bestimmen 5, 6 des Geschwindigkeitsvektors erreicht, wobei Genauigkeit und Dynamik von einer durch die Wahl der Mindestlänge L_{M} (Fig. 3, 4) und der Maximalanzahl N_{M} (Fig. 4) der maximal zu summierenden Vektoren festgelegt werden.

In Fig. 2 ist eine beispielhafte Darstellung von Längen L von Vektoren, welche von einer Erfassungseinheit an eine Verarbeitungseinheit übermittelt werden, wobei die Längen L über der Zeit t in diskreten Zeitschritten t₁ bis t₁₀ gezeigt sind. Das Übermitteln 2 (Fig. 1) erfolgt hier also in diskreten Zeitschritten t₁ bis t₁₀. Über den graphischen Darstellungen sind die Längen L der Vektoren zur Orientierung als Ziffern angegeben. Die Längen L sind im vorliegenden Fall für eine langsame Bewegung aufgetragen, die im letzten Zeitschritt t₁₀ schneller wird. Als langsam ist bspw. eine Bewegung mit einer Geschwindigkeit von 1 mm/s zu bezeichnen. Zu den Zeitpunkten t₁ bis t₁₀ werden jeweils einzelne Vektoren an die Verarbeitungseinheit übertragen. Die Vektoren haben im vorliegenden Beispiel zunächst sehr geringe Längen L, nämlich Werte zwischen 1 und 5 zu den Zeiten t₁ bis t₉. Zu dem Zeitpunkt t₁₀ wird die Bewegung schneller, so dass die Länge L des übertragenen Vektors wie erkennbar größer wird. Die Einheiten für die Längen L sind im vorliegenden Fall willkürlich gewählt, es kann sich also um beliebige Werte handeln, welche bspw. im Bereich von 1 bis 1000 liegen, also typischerweise mehrere, z.B. drei, Größenordnungen überstreichen. Maximal erfasste Geschwindigkeiten liegen im gezeigten Beispiel also folglich beispielsweise bei 1000mm/s.

Fig. 3 zeigt eine beispielhafte Darstellung einer Länge eines Summenvektors über der Zeit gemäß einer Ausführungsform entsprechend den in Fig. 2 dargestellten Längen von Vektoren.

Genauer gesagt wird gemäß Fig. 3 die Länge des Summenvektors zu einem jeweiligen Zeitpunkt mit einem aktuellen Vektor neu initialisiert und dann durch eine rückwärtsgerichtete Addition bis zu einem Erreichen eines Abbruchkriteriums berechnet. Gemäß der Ausführungsform in Fig. 3 ist das Abbruchkriterium gegeben, falls eine Länge L_{S} des Summenvektors eine vorbestimmte Mindestlänge L_{M} erreicht oder überschreitet und/oder falls der Summenvektor zu zwei aufeinander folgenden Zeitpunkten gleich einem Nullvektor ist, d.h. die Länge L_{S} des Summenvektors null ist.

In Fig. 3 ist eine beispielhafte Darstellung einer Länge L_{S} eines Summenvektors über der Zeit t in diskreten Zeitschritten t₁ bis t₁₀ gezeigt. Über der graphischen Darstellung ist die Länge L_{S} des Summenvektors zu dem entsprechenden Zeitpunkt als Ziffer angegeben. Gut zu erkennen ist, wie die Länge L_{S} des Summenvektors über die Zeitschritte t₁ bis t₆ kontinuierlich ansteigt, da die Länge L_{S} des Summenvektors die Summe der Längen L der übermittelten Vektoren ist, die in Fig. 2 dargestellt sind. Zu dem Zeitpunkt t₆ überschreitet die Länge L_{S} des Summenvektors die Mindestlänge L_{M}, welche im vorliegenden Beispiel auf 10 gesetzt ist.

Dies hat zur Folge, dass mit dem Summenvektor des Zeitpunkts t₆ der Geschwindigkeitsvektor bestimmt wird. Im vorliegenden Beispiel würde also die Länge L_{S} des Summenvektors, welche zum Zeitpunkt t₆ 13 beträgt, durch die Anzahl der beitragenden Einzelvektoren, welche in dem vorliegenden Beispiel 6 beträgt, geteilt werden, so dass die ermittelte Geschwindigkeit hier 2 1/6 beträgt.

Für den Zeitpunkt t7 werden die Vektoren t7 (=2), t6 (=5), t5 (=2) und t4 (=1) aufsummiert. Die Summe von t7 bis t4 ergibt 10, womit die Mindestlänge erreicht ist. Die ermittelte Geschwindigkeit liegt bei 10: 4 = 2,5.

Für den Zeitpunkt t8 werden die Vektoren t8 (=0), t7 (=2), t6 (=5), t5 (=2) und t4 (=1) aufsummiert. Die Summe von t8 bis t4 ergibt 10, womit die Mindestlänge erreicht ist. Die ermittelte Geschwindigkeit liegt bei 10: 5 = 2.

Für den Zeitpunkt t9 wird nur der Vektor t9 (=0) betrachtet. Dann bricht die Summenbildung ab, da nach t8 (=0) der zweite Nullvektor direkt aufeinander folgt. Der Geschwindigkeitsvektor wird als Nullvektor bestimmt. Ein langes Nachlaufen des Summenvektors beim Stopp wird damit verhindert.

Für den Zeitpunkt t10 wird der Vektor t10 (=11) betrachtet. Da dieser Vektor schon über der Minimallänge liegt, wird die Summenbildung abgebrochen. Die ermittelte Geschwindigkeit ist 11: 1 = 11. Auf die schnelle Bewegung wird ohne Verzögerung reagiert.

Fig. 4 zeigt eine beispielhafte Darstellung einer Länge eines Summenvektors über der Zeit gemäß einer weiteren Ausführungsform entsprechend den in Fig. 2 dargestellten Längen von Vektoren.

Genauer gesagt wird gemäß Fig. 4 die Länge des Summenvektors zu einem jeweiligen Zeitpunkt mit einem aktuellen Vektor neu initialisiert und dann durch eine rückwärtsgerichtete Addition bis zu einem Erreichen eines Abbruchkriteriums berechnet. Gemäß der weiteren Ausführungsform in Fig. 4 ist das Abbruchkriterium gegeben, falls eine Länge L_{S} des Summenvektors eine vorbestimmte Mindestlänge L_{M} erreicht oder überschreitet und/oder falls der Summenvektor zu zwei aufeinander folgenden Zeitpunkten gleich einem Nullvektor ist, d.h. die Länge L_{S} des Summenvektors null ist und/oder die zu dem Summenvektor beitragende Maximalanzahl an Vektoren summiert ist, d.h. eine vorbestimmte Anzahl der Vektoren summiert ist. Ist die Maximalanzahl erreicht, ohne dass die vorbestimmte Mindestlänge L_{M} erreicht oder überschritten ist, wird der Geschwindigkeitsvektor als Nullvektor bestimmt.

In Fig. 4 ist die maximal in den Summenvektor einfließende Maximalanzahl N_{M} an Vektoren zusätzlich zu der Mindestlänge von L_{M} von 10 in Fig. 3 auf 5 gesetzt.

Die Vektoren zu den Zeitpunkten t1 bis t5 werden analog Fig. 3 zu den jeweiligen Zeitpunkten t1 bis t5 summiert. Da zu dem Zeitpunkt t5 die Maximalanzahl N_{M} an Vektoren von 5 erreicht ist, wird die Summenbildung der Vektoren abgebrochen und der sich ergebende Geschwindigkeitsvektor zu null bestimmt, da der Summenvektor zu dem Zeitpunkt t5 unter der Mindestlänge L_{M} von 10 ist.

Für den Zeitpunkt t6 werden die Vektoren t6 bis t2 addiert. Der Summenvektor ist 12 und damit größer als die Mindestlänge L_{M} von 10. Die ermittelte Geschwindigkeit liegt bei 12 : 5 = 2,4.

Für den Zeitpunkt t7 werden die Vektoren t7 bis t4 addiert. Dann wird die Mindestlänge von 10 erreicht. Die ermittelte Geschwindigkeit liegt bei 10: 4 = 2,5.

Für den Zeitpunkt t8 werden die Vektoren t8 bis t4 addiert. Wiederum wird die Mindestlänge von 10 erreicht. Die ermittelte Geschwindigkeit liegt bei 10: 5 = 2

Für den Zeitpunkt t9 wird nur der Vektor t9 addiert, da nach t8 der zweite Nullvektor folgt. Die ermittelte Geschwindigkeit ist daher null.

Für den Zeitpunkt t10 wird nur der Vektor t10 betrachtet, der die Mindestlänge bereits übersteigt. Die ermittelte Geschwindigkeit ist 11: 1 = 11.

Das hat zur Folge, dass nach dem Zeitpunkt t₅ unabhängig davon, ob der Summenvektor die Mindestlänge L_{M} erreicht oder nicht, ein Bestimmen 5, 6 des Geschwindigkeitsvektors erfolgt. Es kann z.B. jedoch auch eine zeitliche Grenze festgelegt werden, so dass spätestens alle beispielsweise 200 ms ein Bestimmen 5, 6 des Geschwindigkeitsvektors erfolgt. Nach wie vor wird jedoch in diesem Beispiel bei einem Erreichen der Mindestlänge L_{M} durch den Summenvektor unabhängig von einer verflossenen Zeit oder der Anzahl N der augenblicklich zu dem Summenvektor summierten Vektoren der Geschwindigkeitsvektor bestimmt. In dem vorliegenden Fall wird, da die Länge L_{S} des Summenvektors zu dem Zeitpunkt t₅ mit 8 unter der im vorliegenden Fall geltenden Mindestlänge L_{M} von 10 liegt, der Geschwindigkeitsvektor als Nullvektor bestimmt. Da im vorliegenden Beispiel der aktuelle Geschwindigkeitsvektor auch bestimmt wird, sobald zwei übermittelte Vektoren nacheinander eine Länge L gleich null aufweisen, wird nach dem Zeitpunkt t₉ wieder der aktuelle Geschwindigkeitsvektor bestimmt, was im vorliegenden Beispiel einen aktuellen Geschwindigkeitsvektor von null ergibt, da die Länge L_{S} des Summenvektors zu dem Zeitpunkt t₉ die Mindestlänge L_{M} von 10 nicht erreicht. Zu dem Zeitpunkt t₁₀ wird ein die Mindestlänge L_{M} überschreitender Vektor übermittelt, der also eine schnellere Bewegung repräsentiert, weshalb wieder bereits zu oder unmittelbar nach dem Zeitpunkt t₁₀ die aktuelle Geschwindigkeit ermittelt wird. Diese ergibt sich dann in dem gezeigten Beispiel zu 11. Es wird somit deutlich, dass das Verfahren sehr flexibel ist, und sowohl auf langsame als auch auf schnelle Bewegungen anwendbar ist.

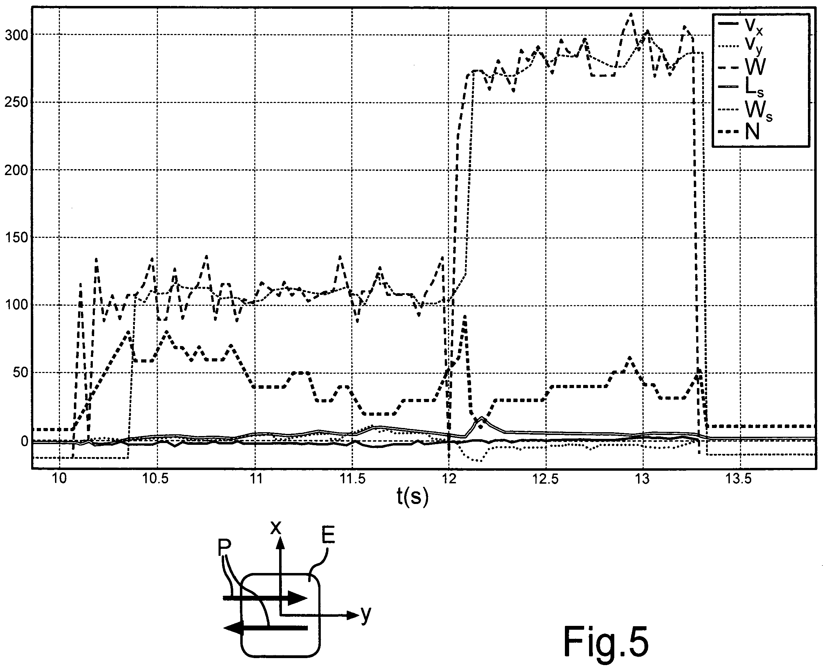

In Fig. 5 ist eine Darstellung von für das Verfahren relevanten Größen in willkürlichen Einheiten über der Zeit in Sekunden als Graph gezeigt. Unterhalb des Graphen ist zusätzlich eine schematische Darstellung der den gezeigten Größen zu Grunde liegenden Geste als Pfeil P in einer x-y-Ebene vor einer symbolisierten Erfassungseinrichtung E gezeigt.

Es handelt sich bei der Geste im vorliegenden Beispiel um eine langsame Wischbewegung von links nach rechts und dann ohne Pause wieder zurück. Eine Bewegung erfolgt also nur in y-Richtung. Dies ist aus den im Graphen gezeigten Bewegungsdaten, insbesondere der Geschwindigkeit vₓ in x-Richtung und der Geschwindigkeit v_{y} in y-Richtung, auch gut zu erkennen. Die Geschwindigkeit vₓ in x-Richtung ist nämlich durchgehend annähernd gleich null, wohingegen die Geschwindigkeit v_{y} in y-Richtung zunächst zwischen t≈10,1s und t=12s leicht positiv ist, also eine langsame, nach rechts gerichtete Geste beschreibt, und dann zwischen t=12s und t≈13,3s leicht negativ ist, also eine langsame, nach links gerichtete Geste beschreibt. Offensichtlich findet also zum Zeitpunkt t=12s ein Richtungswechsel der Wischbewegung statt.

Nachdem die Bewegungsdaten als Vektoren übermittelt worden sind, liegt in der Verarbeitungseinheit mit der Information über die Geschwindigkeiten vₓ, v_{y} auch eine Information über eine Richtung W der von den Bewegungsdaten repräsentierten Geste vor. Das genaue Bestimmen der Richtung ist sogar für ein Interpretieren einer Geste besonders wichtig, oft wichtiger als das genaue Bestimmen der Geschwindigkeit einer Geste. Die in den übermittelten Vektoren enthaltene Richtungsinformation ist als Richtung W in dem Graphen gezeigt. Die Richtung W kann hier Werte zwischen -30° und 330° einnehmen. Es ist zu erkennen, dass die Richtung W zunächst zwischen t≈10,1s und t=12s einen Wert von ca. 110° einnimmt und dann zwischen t=12s und t≈13,3s auf ca. 290° ansteigt. Diese Änderung der Richtung W um ca. 180° entspricht dem Richtungswechsel der Wischbewegung. Eine wichtige Erkenntnis ist hier, das der Wert W stark schwankt, also die Richtung W im Sinne einer Gestenerkennung schwer auszuwerten ist. Dies ist allgemein bei langsamen Gesten oft der Fall.

Die Vorteile des Verfahrens werden deutlich, wenn die sich auf den Summenvektor beziehenden Größen betrachtet werden. Diese sind die Länge L_{S} des Summenvektors, die Richtung W_{S} des Summenvektors sowie die Anzahl N der in dem Summenvektor augenblicklich aufsummierten Vektoren. Die Länge L_{S} des Summenvektors zeigt im vorliegenden Beispiel den Absolutbetrag der Geschwindigkeit. Zu beachten ist insbesondere die Richtung W_{S} des Summenvektors im Vergleich zu der Richtung W. Die Richtung W_{S} ist nämlich durch Mittelung aus der Richtung W hervorgegangen, damit geglättet und so wesentlich leichter im Sinne einer Gestenerkennung auszuwerten.

Die Funktionsweise des Verfahrens lässt sich gut am Verlauf der Anzahl N der im Summenvektor aufsummierten Vektoren verstehen. Ab t≈10,1s steigt die Anzahl N stark an, da nun überhaupt erst Bewegungsdaten erfasst werden und Vektoren übermittelt und zum Summenvektor addiert werden. Sobald zum ersten Mal aus dem Summenvektor der Geschwindigkeitsvektor bestimmt wird, pendelt sich die Anzahl N der aufsummierten Vektoren ein. Mit dem leichten Zunehmen der Geschwindigkeit v_{y} steigt auch die Länge L der aufsummierten Vektoren, weshalb für ein genaues Bestimmen 6 (Fig. 1) des Geschwindigkeitsvektors weniger von diesen Vektoren aufsummiert werden müssen. Die Anzahl N sinkt also wie gezeigt. Bei dem Richtungswechsel zu t=12s bricht die Geschwindigkeit v_{y} in y-Richtung kurzfristig ein, wodurch die Länge L der übermittelten Vektoren sinkt und folglich wieder mehr von diesen aufsummiert werden. Die Anzahl N steigt also kurz nach t=12s stark. Mit einem Steigen der Geschwindigkeit v_{y} sinkt die Anzahl N dann wieder. Es korreliert hier also ein Sinken der Geschwindigkeit mit einem Steigen der Anzahl N der im Summenvektor aufsummierten Vektoren, mit anderen Worten liegt hier eine umgekehrte Proportionalität zwischen der Anzahl N und der Geschwindigkeit der von den Bewegungsdaten repräsentierten Geste vor.

Obgleich die vorliegende Erfindung vorhergehend anhand von Ausführungsbeispielen beschrieben worden ist, versteht es sich, dass verschiedene Änderungen und Ausgestaltungen durchgeführt werden können, ohne den Umfang der vorliegenden Erfindung zu verlassen, wie er in den beiliegenden Ansprüchen definiert ist.

Bezüglich weiterer Merkmale und Vorteile der vorliegenden Erfindung wird ausdrücklich auf die Offenbarung der Zeichnung verwiesen.

## Patentansprüche

1. Verfahren zum Bestimmen (5, 6) eines Geschwindigkeitsvektors für ein sensorisches Erkennungssystem in einem Kraftwagen, mit den Schritten:
Erfassen (1) von Bewegungsdaten durch eine Erfassungseinheit, und
Übermitteln (2) der Bewegungsdaten in Form von Vektoren an eine Verarbeitungseinheit,
**gekennzeichnet durch**
Summieren (3) der Vektoren zu einem Summenvektor **durch** die Verarbeitungseinheit, bis der Summenvektor eine vorbestimmte Mindestlänge (L_{M}) erreicht oder eine vorbestimmte Anzahl an Vektoren summiert ist, und
Bestimmen (6) des Geschwindigkeitsvektors **durch** Mittelung der in dem Summenvektor beinhalteten Bewegungsdaten, falls die vorbestimmte Mindestlänge (L_{M}) des Summenvektors erreicht ist.

2. Verfahren nach Anspruch 1, **gekennzeichnet durch** Bestimmen (5) des Geschwindigkeitsvektors als Nullvektor, falls die vorbestimmte Anzahl der Vektoren summiert ist und die vorbestimmte Mindestlänge (L_{M}) des Summenvektors nicht erreicht ist.

3. Verfahren nach Anspruch 1 oder 2,
**dadurch gekennzeichnet, dass**
das Summieren (3) der Vektoren zu einem Summenvektor durch die Verarbeitungseinheit abgebrochen und der Geschwindigkeitsvektor als Nullvektor bestimmt wird, falls das Summieren (3) eine vorgegebene Zeit erfolgt ist.

4. Verfahren nach einem der Ansprüche 1 bis 3,
**dadurch gekennzeichnet, dass**
der Geschwindigkeitsvektor als Nullvektor bestimmt wird, falls zwei aufeinander folgende, zu summierende Vektoren jeweils eine Länge (L) von null haben.

5. Verfahren nach einem der Ansprüche 1 bis 4,
**dadurch gekennzeichnet, dass**
der Geschwindigkeitsvektor aus dem Summenvektor bestimmt wird, falls für eine vorgegebene Zeit kein Vektor an die Verarbeitungseinheit übermittelt wird.

6. Verfahren nach einem der Ansprüche 1 bis 5,
**dadurch gekennzeichnet, dass**
der Geschwindigkeitsvektor aus dem Summenvektor bestimmt wird, falls sich eine Länge (L) zweier aufeinander folgender, zu summierender Vektoren um mehr als die Mindestlänge (L_{M}) unterscheidet.

7. Verfahren nach einem der Ansprüche 1 bis 6,
**dadurch gekennzeichnet, dass**
die Bewegungsdaten durch eine berührungsempfindliche Erfassungseinheit, vorzugsweise ein optisches Fingernavigationsmodul, erfasst werden.

8. Verfahren nach einem der Ansprüche 1 bis 7,
**dadurch gekennzeichnet, dass**
das Übermitteln (2) der Bewegungsdaten in diskreten, vorbestimmten Zeitintervallen erfolgt.

9. Verfahren nach einem der Ansprüche 1 bis 7,
**dadurch gekennzeichnet, dass**
das Übermitteln (2) der Bewegungsdaten in veränderlichen Zeitintervallen erfolgt.

10. Vorrichtung zum Bestimmen (5, 6) eines Geschwindigkeitsvektors für ein sensorisches Erkennungssystem in einem Kraftwagen, wobei die Vorrichtung Einrichtungen aufweist, die dazu ausgelegt sind, ein Verfahren nach einem der Ansprüche 1 bis 9 durchzuführen.

## Claims

1. Method for the determination (5, 6) of a speed vector for a sensory recognition system in a motor vehicle, comprising the steps of: the acquisition (1) of movement data by an acquisition unit and the transmission (2) of the movement data in the form of vectors to a processing unit,
**characterised by**
the summing (3) of the vectors into a sum vector by the processing unit until the sum vector reaches a predetermined minimum length (L_{M}) or a predetermined number of vectors has been summed, and
the determination (6) of the speed vector by averaging the movement data contained in the sum vector if the predetermined minimum length (L_{M}) of the sum vector is reached.

2. Method according to claim 1, **characterised by** the determination (5) of the speed vector as zero vector if the predetermined number of vectors has been summed and the predetermined minimum length (L_{M}) of the sum vector is not reached.

3. Method according to claim 1 ir 2,
**characterised in that**
the summing (3) of the vectors into a sum vector by the processing unit is terminated and the speed vector is determined as zero vector if the summing (3) has been carried out for a predetermined time.

4. Method according to any of claims 1 to 3,
**characterised in that**
the speed vector is determined as zero vector if each of two consecutive vectors to be summed has a length (L) of zero.

5. Method according to any of claims 1 to 4,
**characterised in that**
the speed vector is determined from the sum vector if no vector is transmitted to the processing unit for a predetermined time.

6. Method according to any of claims 1 to 5,
**characterised in that**
the speed vector is determined from the sum vector if a length (L) of two consecutive vectors to be summed differs by more than the minimum length (L_{M}).

7. Method according to any of claims 1 to 6,
**characterised in that**
the movement data are acquired by a touch-sensitive acquisition unit, preferably an optical finger navigation module.

8. Method according to any of claims 1 to 7,
**characterised in that**
the movement data are transmitted in discrete pre-determined time intervals.

9. Method according to any of claims 1 to 7,
**characterised in that**
the movement data are transmitted in variable time intervals.

10. Device for the determination (5, 6) of a speed vector for a sensory recognition system in a motor vehicle, wherein the device comprises facilities designed for carrying out a method according to any of claims 1 to 9.

## Revendications

1. Procédé de détermination (5, 6) d'un vecteur de vitesse pour un système de reconnaissance sensorielle dans un véhicule à moteur, comprenant les étapes de :
détection (1) de données de mouvement par un module de détection et
transmission (2) des données de mouvement sous forme de vecteurs à un module de traitement,
**caractérisé par**
l'addition (3) des vecteurs en un vecteur cumulé par le module de traitement jusqu'à ce que le vecteur cumulé atteigne une longueur minimale prédéterminée (L_{M}) ou qu'un nombre prédéterminé de vecteurs soit additionné, et
la détermination (6) du vecteur de vitesse par le calcul de la moyenne des données de mouvement contenues dans le vecteur cumulé au cas où la longueur minimale prédéterminée (L_{M}) du vecteur cumulé est atteinte.

2. Procédé selon la revendication 1, **caractérisé par** la détermination (5) du vecteur de vitesse comme vecteur nul au cas où le nombre prédéterminé de vecteurs est additionné et la longueur minimale prédéterminée (L_{M}) du vecteur cumulé n'est pas atteinte.

3. Procédé selon la revendication 1 ou 2,
**caractérisé en ce que**
l'addition (3) des vecteurs en un vecteur cumulé par le module de traitement est interrompue et le vecteur de vitesse est déterminé comme vecteur nul au cas où l'addition (3) est effectuée sur une durée prédéfinie.

4. Procédé selon une des revendications 1 à 3,
**caractérisé en ce que**
le vecteur de vitesse est déterminé comme vecteur nul au cas où deux vecteurs consécutifs à additionner ont chacun une longueur (L) de zéro.

5. Procédé selon une des revendications 1 à 4,
**caractérisé en ce que**
le vecteur de vitesse est déterminé à partir du vecteur cumulé au cas où aucun vecteur n'est transmis au module de traitement pendant une durée prédéfinie.

6. Procédé selon une des revendications 1 à 5,
**caractérisé en ce que**
le vecteur de vitesse est déterminé à partir du vecteur cumulé au cas où une longueur (L) de deux vecteurs consécutifs à additionner diffère de plus de la longueur minimale (L_{M}).

7. Procédé selon une des revendications 1 à 6,
**caractérisé en ce que**
les données de mouvement sont détectées par un module de détection tactile, de préférence un module de navigation digitale optique.

8. Procédé selon une des revendications 1 à 7,
**caractérisé en ce que**
la transmission (2) des données de mouvement s'effectue à des intervalles de temps discrets prédéterminés.

9. Procédé selon une des revendications 1 à 7,
**caractérisé en ce que**
la transmission (2) des données de mouvement s'effectue à des intervalles de temps variables.

10. Dispositif de détermination (5, 6) d'un vecteur de vitesse pour un système de reconnaissance sensorielle dans un véhicule à moteur, dans lequel le dispositif présente des installations qui sont conçues pour réaliser un procédé selon une des revendications 1 à 9.
